# NEUE EUROPÄISCHE PATENTSCHRIFT

(11) **EP 0 594 810 B2**
(45) Veröffentlichungstag und Bekanntmachung des Hinweises auf die Entscheidung über den Einspruch: **02.01.2003**
(45) Hinweis auf die Patenterteilung: 13.12.1995
(21) Anmeldenummer: 93908901.7
(22) Anmeldetag: 02.04.1993
(51) Int. Cl.: B65H 75/50, B65H 75/14, B23P 15/00, B21D 19/04, B21K 23/04, B21K 21/12

(54) **SPULENKÖRPER UND VERFAHREN ZU DESSEN HERSTELLUNG**
BOBBIN BODY AND PROCESS FOR PRODUCING THE SAME
CORPS DE BOBINE ET SON PROCEDE DE FABRICATION

(30) Priorität: 03.04.1992 DE 4211172
(43) Veröffentlichungstag der Anmeldung: 04.05.1994
(73) Patentinhaber: HILDEBRANDT-SPULEN-BOBBINS GmbH, 87719 Mindelheim (DE)
(72) Erfinder: PRECHTEL, Michael, D-8000 München 71 (DE); LENARCIC, Davorin, D-86825 Bad Wörishofen (DE)
(74) Vertreter: Vollnhals, Aurel, Dipl.-Ing.
(86) Internationale Anmeldenummer: EP9300828
(87) Internationale Veröffentlichungsnummer: WO93020003

(56) Entgegenhaltungen:
- DE-A- 3 805 814
- DE-A- 3 805 814
- DE-A- 3 908 223
- DE-C- 3 908 223
- DE-U- 9 206 652
- PATENT ABSTRACTS OF JAPAN vol. 016, no. 270 (M-1266)17. Juni 1992
- DATABASE WPI Section Ch, Week 7216, Derwent Publications Ltd., London, GB; Class F02, AN 72-25737
- PATENT ABSTRACTS OF JAPAN vol. 013, no. 545 (M-902)6. Dezember 1989
- Tschätsch, Heinz:"Manuale lavorazioni per defaormazione, procedimenti-machine-utensili", Tecniche Nuove Milano 1980,
- Uebersetzung von "Taschenbuch Umformtechnik", Carl Hanser Verlag München Wien, 1977

## Beschreibung

Die Erfindung betrifft ein Verfahren zur Herstellung eines Spuienkörpers aus einer Aluminiumlegierung, wobei der Spulenkörper einen zylindrischen Wickelkörper zur Aufnahme von Wickelgut, insbesondere Synthesegarn, und demgegenüber durchmessergrößare Endflansche aufweist.

Aus der DE 39 08 223 C2 ist ein derartiger Spulenkörper für fadenförmiges Wickelgut bekannt, wobei zwei Spulenkörperhälften aus einer Leichtmetallegierung an ihren stumpf aneinander angesetzten Kernrohrenden durch eine Reibschweißnaht fest miteinander verbunden sind. Die Spulenkörperhälften sind hierbei durch Fließpressen hergestellt, wobei jedoch der Gestaltung des Spulenkörpers durch das Fließpreßverfahren bestimmte geometrische Grenzen gesetzt sind, da ab einem bestimmten Durchmesser der Spulenflansche die Wandstärke der Endflansche gegenüber einem relativ großen Durchmesser sehr gering ist und somit Inhomogenitäten in den Spulenkörperhälften entstehen können, die die Festigkeit des Spulenkörpers herabsetzen. Hierbei kommt der Festigkeit des Spulenkörpers eine wesentliche Bedeutung zu, da die Endflansche des Spulenkörpers, insbesondere beim Aufwickeln von hochfesten Elastik- oder Synthesegarnen auseinandergedrückt werden und somit hohen Belastungen ausgesetzt sind.

Darüberhinaus sind auch aus mehreren Teilen geschweißte oder zusammengeschraubte Spulenkörper bekannt, die jedoch aufgrund der Aufbiegung der Endflansche Spalte entstehen lassen, in die die inneren Wicklungen des Wickelgutes eingreifen und somit festgeklemmt werden. Außerdem sind auch gegossene Spulenkörper bekannt, die jedoch den auftretenden Belastungen, insbesondere im Übergangsbereich zwischen dem Wickelrohr und den Endflanschen nicht gewachsen sind und somit brechen können. Diese Gefahr besteht selbst bei aus Vollmaterial herausgedrehten Spulenkörpern, da durch den scharfen Übergang im Eckbereich zwischen den Endflanschen auf das Wickelrohr und den unterbrochenen Faserverlauf Kerbwirkungen entstehen, die zum Bruch führen können. Diese Ausführung ist durch den hohen Materialverbrauch und lange Bearbeitungszeit für größere Serien aus Kostengründen nicht geeignet.

Demzufolge liegt der Erfindung die Aufgabe zugrunde, einen Spulenkörper und ein Verfahren zu dessen Herstellung anzugeben, mit dem eine höhere Festigkeit des Spulenkörpers bei zugleich geringem Herstellungsaufwand erreicht wird.

Diese Aufgabe wird gelöst mit einem Verfahren gemäß den Merkmalen des Anspruches 1.

Durch die einstückige Herstellung des Spulenkörpers unter vorzugsweise gleichzeitigem Umformen der beiden Enden eines im wesentlichen zylindrischen Spulenrohlings wird ein ununterbrochener Faserverlauf, insbesondere in dem kritischen Übergangsbereich von dem Wickelkörper zu den Endflanschen erreicht. Hieraus resultiert eine besonders hohe Festigkeit des Spulenkörpers. Zugleich wird durch die einstückige Ausbildung des Spulenkörpers ein beträchtlich verringerter Herstellungsaufwand erreicht, da gegenüber dem Stand der Technik nicht mehr mehrere Einzetteile gesondert hergestellt werden müssen, die dann in zeitaufwendiger Weise zusammengefügt werden müssen. Zudem ergibt sich eine Reduzierung der erreichbaren Toleranzen, da Fehlstellungen der Bauteile zueinander, beispielsweise Parallelitäts- oder Achsenfehler vermieden werden, so daß der Spulenkörper endmaßgenau herstellbar ist und mit sehr geringem Aufmaß für die abschließende Feinbearbeitung durch Überdrehen auskommt.

Weitere vorteilhafte Ausgestaltungen sind Gegenstand der Unteransprüche.

Nachfolgend werden Ausführungsbeispiele des Herstellungsverfahrens für einen Spulenkörper anhand der Zeichnung näher erläutert und beschrieben. Es zeigen:

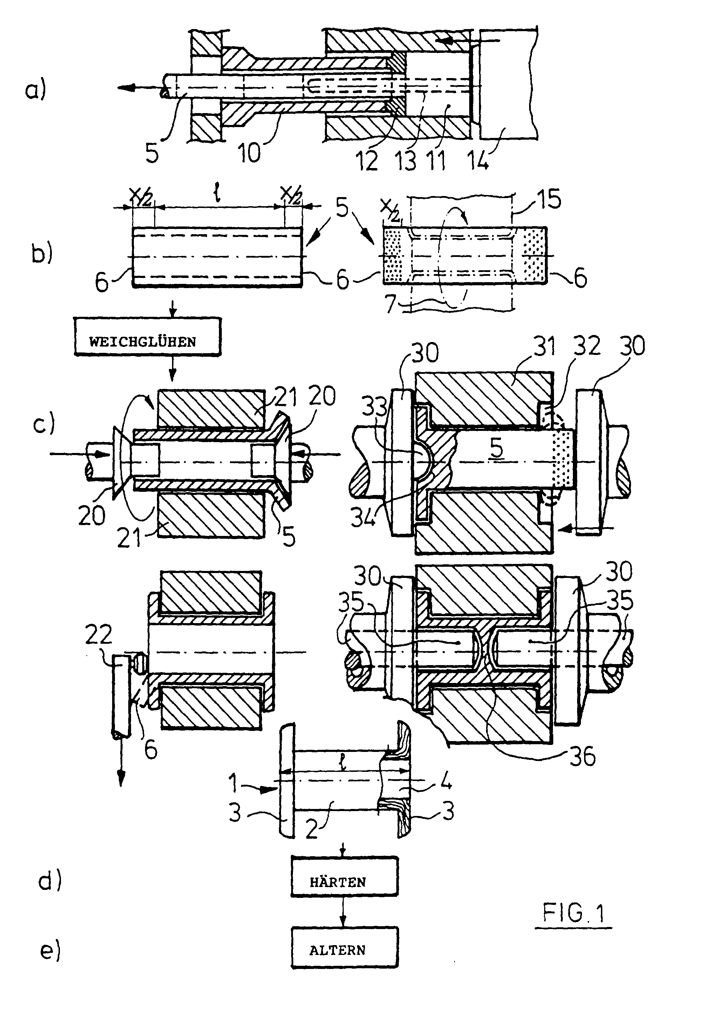

- Fig. 1: ein Ablaufdiagramm zur Darstellung einer Spulenkörper-Herstellung gemäß einer ersten und zweiten Ausführung.

In Fig. 1 ist im unteren Bereich das Endprodukt des vorgeschlagenen Herstellungsverfahrens dargestellt, nämlich ein Spulenkörper 1, der im wesentlichen aus einem Wickelkörper 2 und zwei stirnseitigen Endflanschen 3 besteht. Zur Aufspannung des Spulenkörpers 1 mit entsprechenden, nicht näher dargestellten Lagerungen, sowie zur Gewichtsreduzierung weist der Spulenkörper 1 eine mittige Bohrung 4, vorzugsweise eine Durchgangsbohrung auf, wie dies im rechten Teil in der Schnittdarstellung angedeutet ist. Der Spulenkörper 1 weist hierbei eine Länge I auf, sowie einen ununterbrochenen Faserverlauf, wie dies in der Schnittdarstellung anstatt einer Schraffur angedeutet ist. Hieraus ist ersichtlich, daß insbesondere in dem kritischen Übergangsbereich zwischen Wickelkörper 2 und den Endflanschen 3 der Faserverlauf des Ausgangsmaterials, bevorzugt die Aluminiumlegierung AlZnMgCu 0,5 (DIN 7022) der geometrischen Form angepaßt ist und im Gegensatz zu von aus Vollmaterial gedrehten Spulenkörpern nicht unterbrochen ist.

Nachfolgend wird das Verfahren zur Herstellung eines derartigen Spulenkörpers 1 mit zwei alternativen Verfahren, insbesondere der Kaltverformung durch Bördeln (linke Spalte der Zeichnung) und Warmverformung durch Schmieden (rechte Spalte der Zeichnung) näher beschrieben, wobei jedoch die einleitenden und abschließenden Verfahrensschritte identisch sind. Als erster Verfahrensschritt wird zunächst ein zylindrischer Spulenrohling 5 in Form eines Stranges mittels eines Stempels 10 aus einem vorgewärmten Preßblock 11 hergestellt, der durch eine Matrize 12 an die Vorderseite des Stempels 10 gedrückt wird. Hierzu wird bevorzugt ein indirektes Strangpreßverfahren angewendet, wobei der Preßstempel 10 hohl ausgeführt ist, durch den der den Spulen-Rohling 5 bildende Preßstrang austritt. Hierdurch wird ein homogener Faserverlauf erreicht. Der Preßstrang ist für die in der rechten Spalte dargestellte Warmverformung durch Schmieden als Vollmaterial ausgebildet, während für die in der linken Spalte dargestellte Herstellungsalternative durch Kaltumformen ein rohrförmiger Spulen-Rohling 5 benötigt wird. Um diesen rohrförmigen Spulen-Rohling 5 herzustellen, ist für das Strangpressen ein strichliert dargestellter Dorn 13 vorgesehen, der in die Matrize 12 hineinragt und an einem Verschlußstück 14 gelagert ist. Beim Strangpressen wird hierbei das Verschlußstück 14 zusammen mit der den Preßblock 11 bildenden, auf etwa 360 bis 420 °C erwärmten Aluminiumlegierung nach links gegen den Stempel 10 bewegt, so daß der Preßstrang hierbei als Rohr austritt.

Im Verfahrensschritt b wird dann der Spulen-Rohling 5, der entweder als Rohr oder als Vollmaterial ausgebildet ist, auf die gewünschte Spulenkörperlänge I abgelängt, wobei jedoch ein zur Ausbildung der Endflansche 3 erforderlicher Material-überschuß entsprechend dem Übermaß x (an beiden Enden jeweils die Hälfte x/2) berücksichtigt ist. Wenn beispielsweise die Spulenkörperlänge I = 150 mm beträgt, ist zur Ausbildung der Flansche (wiederum abhängig von deren Enddurchmesser) etwa ein Übermaß von x = 20 mm berücksichtigt, so daß der Spulen-Rohling 5 etwa auf eine Länge von 170 mm im Verfahrensschritt b abgelängt wird. Durch das in dem Verfahrensschritt a in Strichpunktlinien angedeutete Abtrennen von dem Preßgutstrang ergeben sich somit an den Stirnseiten des Spulen-Rohlings 5 die Enden 6.

Wie beim Verfahrensschritt b in der rechten Spalte in Strichpunktlinien dargestellt ist, kann der zentrale Bereich des Spulen-Rohlings 5, der dann den Wickelkörper 2 bildet, durch Schmieden mit Schmiedewerkzeugen 15 in seinem Durchmesser reduziert werden, so daß sich eine hantelförmige Außenform ergibt. Um hierbei eine möglichst gute Maßgenauigkeit zu erreichen, wird hierbei der Spulen-Rohling 5 während der Bearbeitung der sich gegenüberliegenden Schmiedewerkzeuge 15 gedreht, wie dies mit dem strichpunktierten Pfeil 7 angedeutet ist. Dieses Verfahren mit zusätzlicher radialer Durchmesserreduzierung eignet sich insbesondere für Spulenkörper, die einen im Vergleich zum Durchmesser des Wickelkörpers 2 besonders großen Durchmesser der Endflansche 3 aufweisen. Die im Bereich der Enden 6 verdickten Bereiche (hier punktiert dargestellt) dienen nach dem Stauchen in axialer Richtung der Ausbildung der Endflansche 3. Hierbei ist die axiale Länge dieser verdickten Bereiche ebenfalls mit einer axialen Länge von jeweils x/2 so gewählt, daß deren Volumen nach dem Stauchen dem Volumen der Endflansche 3 entspricht.

Zunächst soll nunmehr das Umformen (Schritt c) bei Raumtemperatur durch Bördeln der beiden Enden 6 des rohrförmig ausgebildeten Spulen-Rohlings 5 beschrieben werden, wie dies in der linken Spalte der Zeichnung dargestellt ist. Vor dem Umformen bei Raumtemperatur wird zunächst der Spulen-Rohling 5 noch spannungsfrei- oder weichgeglüht, wobei dies bei etwa 340 bis 400°C über zwei bis vier h erfolgt, dann mit einer geringen Temperaturabfallrate von 25°C/h auf 200 bis 250 ° C abgekühlt wird, dieser Temperaturwert dann eine bis fünf h gehalten wird, bevor der weichgeglühte Spulen-Rohling 5 ohne weitere besondere Maßnahmen abgekühlt wird. Der so wärmebehandelte Spulen-Rohling 5 wird dann in ein backenförmiges Spannwerkzeug 21 eingespannt, das rotierbar ist und eine axiale Länge entsprechend dem Spulenkörper 1 minus der Dicke der beiden Endflansche 3 aufweist. Unter Rotation des Spulen-Rohlinges 5 wird dann seitlich ein kegelförmiges Bördelwerkzeug 20 an die beiden Enden 6 angepreßt, so daß die Enden 6 des Spulen-Rohlings 5 auf einen Winkel von etwa 120° aufgeweitet werden, wie dies im rechten Bildteil angedeutet ist. Da dieses Bördeln oder Aufspreizen der Enden 6 im weichgeglühten Zustand erfolgt, sind keine Haarrisse oder dgl. zu befürchten. Da das Anpressen der Werkzeuge 20 simultan und symmetrisch erfolgt, z. B. mit Hydraulik-Zylindern, kann das Spannwerkzeug 21 relativ leicht dimensioniert sein, da sich die Kräfte kompensieren.

Bei relativ kleinem Durchmesser der Endflanschen 5 ist auch ein Aufspreizen um 180° und damit zur Endform des Spulenkörpers 1 möglich. Bevorzugt wird jedoch in einem zweiten Umformschritt das kegelig aufgespreizte Ende 6 (hier nur in der unteren Hälfte strichliert dargestellt) durch ein Rollierwerkzeug 22, wiederum unter Rotation des Spulen-Rohlings 5 bis zur parallelen Ausrichtung der Enden 6 rolliert, wobei die äußeren Enden des Endflansches 3 an das Spannwerkzeug 21 angedrückt werden und somit eine exakte parallele Ausrichtung der beiden Endflansche 3 erreicht wird. Zudem wird durch das Rollieren die Außenfläche des Spulenkörpers 1 bereits geglättet, so daß an dieser Fläche ggfs. eine Endbearbeitung durch Überdrehen entbehrlich ist. Anstatt dem Rollieren kann auch eine Verformung mittels elektromagnetischer Felder erfolgen, wobei in das Spannwerkzeug 21 Wicklungen eingebettet sind, die den kegelig vorgeformten Endbereich des Spulen-Rohlings 5 an die Stirnseiten des Spannwerkzeuges 21 heranziehen.

Nach Lösen des Spannwerkzeuges 21 liegt somit der zwischen den Verfahrensschritten c und d dargestellte, eingangs beschriebene Spulenkörper 1 vor. Anschließend wird dieser Spulenkörper im Verfahrensschritt d noch durch Erwärmen auf eine Temperatur von 400 bis 450°C über eine Dauer von 25 Minuten und anschließendem Abschrecken in Wasser gehärtet, sowie im Verfahrensschritt e gealtert, wobei diese Wärmebehandlung bevorzugt ein Erwärmen auf 100 bis 130° C mit einer Haltedauer von drei bis sechs h, anschließendes Erhöhen der Temperatur auf 130 bis 160°C mit einer Haltedauer von sechs bis zehn h und einem anschließenden Abkühlen in Luft umfaßt.

Nachfolgend wird nunmehr das Umformen bei Schmiedetemperatur von bevorzugt 360 bis 420° C aus dem beim Verfahrensschritt b, rechte Spalte, dargestellten Spulen-Rohling 5 beschrieben.

Der Spulen-Rohling 5 weist hierbei einen im wesentlichen zylindrischen Querschnitt auf, kann jedoch auch, wie vorstehend beschrieben, in der in Strichpunktlinien dargestellten Hantelform vorliegen. Dieser Spulen-Rohling 5 wird in einem bakkenförmigen, in Art eines Gesenks geschlossenen Spannwerkzeug 31 gehalten. Für die Ausbildung der Endflansche 3 weist dieses Spannwerkzeug 31 auf beiden Seiten jeweils eine an die Form der Endflansche 3 angepaßte scheibenförmige Aussparung 32 auf, in die das überschüssige, punktiert dargestellte Material gemäß dem Übermaß x mit scheibenförmigen Preßwerkzeugen 30 auf beiden Seiten des Spannwerkzeuges 31 gleichzeitig eingepreßt wird (vgl. die in Strichlinien dargestellte Auswölbung). Im rechten Bildteil ist hier der Anfang des Preßvorganges gezeigt, im linken Bildteil das Ende der Umformung. Dieses Einpressen in die Aussparung 32 kann hierbei in einem einzigen Hub erfolgen, jedoch auch mit kurzen Schlägen in Art des Schmiedens erfolgen. Die scheibenförmigen Preß- oder Schmiedewerkzeuge 30 weisen in ihrem Zentrum bevorzugt einen Zapfen 33 auf, der in dem fertiggestellten Spulenkörper 1 eine Vertiefung 34 ergibt, die zum Eindrehen der Lagersitze dient. Außerdem ermöglicht dieser Zapfen 33 eine bessere Materialumlenkung in die Aussparung 32 beim Zusammenpressen der scheibenförmigen Preßwerkzeuge 30. Wie in der Abbildung darunter dargestellt ist, kann der Zapfen 33 auch eine größere axiale Länge aufweisen, so daß eine tiefere Vertiefung 34 entsteht, die bis auf einen mittleren Steg 36 der Durchgangsbohrung 4 des Spulenkörpers 1 entsprechen wurde. Hierdurch ergibt sich eine wesentliche Gewichtsreduzierung des Wickelkörpers 2, sowie ein verbessertes radiales Fließverhalten in die Aussparung 32 zur Bildung der Endflansche 3. Hierzu kann auch ein von den Schmiede- oder Preßwerkzeugen 30 unabhängiges Eindrückwerkzeug 35 vorgesehen sein, das einen größeren Hub als das Schmiede- oder Preßwerkzeug 30 aufweist. Hierdurch wird erreicht, daß das Eindrücken der Vertiefung 34 erst bei geschlossener Aussparung 32, also beim Anliegen des scheibenförmigen Preß- oder Schmiedewerkzeuges 30 an dem Spannwerkzeug 31 erfolgt und somit kein Material austreten kann.

Nach Öffnen des Spannwerkzeuges 31 ergibt sich wiederum der vor dem Verfahrensschritt d dargestellte Spulenkörper 1, der entsprechend den vorhergehenden Angaben anschließend ausgehärtet und gealtert wird.

Durch die dargestellten Herstellungsverfahren für den Spulenkörper 1 ergibt sich ein optimaler Faserverlauf und damit eine hohe Festigkeit bei zugleich verringertem Fertigungsaufwand und reduzierten Fertigungstoleranzen. Der so hergestellte Spulenkörper braucht somit nur noch durch Überdrehen feingearbeitet zu werden, wobei aufgrund der geringen Fertigungstoleranzen, insbesondere hinsichtlich Parallelität der Endflansche 3, minimale Spanmengen abgenommen werden brauchen. Hierdurch ergibt sich eine weitere Beschleunigung des Herstellungsverfahrens.

## Patentansprüche

1. Verfahren zur Herstellung eines Spulenkörpers aus einer Aluminiumlegierung, wobei der Spulenkörper einen zylindrischen Wickelkörper zur Aufnahme von Wickelgut, insbesondere Synthesegarn, und demgegenüber durchmessergrößere Endflansche aufweist, mit folgenden Verfahrensschritten:
a) Strang- oder Fließpressen eines im wesentlichen zylindrischen Spulen-Rohlings (5);
b) Ablängen des Spulen-Rohlings (5) auf die gewünschte Spulenkörperlänge (I) plus einem zur Ausbildung der Endflansche (3) erforderlichen Übermaß (x);
c) Umformen der beiden Enden (6) des Spulen-Rohlings (5) zu den Endflanschen (3);
d) Härten des Spulenkörpers (1); und
e) Altern des Spulenkörpers (1).

2. Verfahren nach Anspruch 1,
**dadurch gekennzeichnet, daß**
das Pressen (Schritt a) als indirektes Strangpressen durchgeführt wird, wobei ein hohler Preßstempel (10) vorgesehen ist, durch den der Spulen-Rohling (5) als Strang austritt.

3. Verfahren nach Anspruch 1 oder 2,
**dadurch gekennzeichnet, daß**
das Strangpressen bei 360 bis 420 °C erfolgt.

4. Verfahren nach einem der Ansprüche 1 bis 3,
**dadurch gekennzeichnet, daß**
das Umformen (Schritt c) bei Raumtemperatur durch Bördeln der beiden Enden (6) des rohrförmig ausgebildeten Spulen-Rohlings (5) erfolgt, wobei dieser zuvor weichgeglüht wurde.

5. Verfahren nach Anspruch 4,
**dadurch gekennzeichnet, daß**
das Weichglühen bei 340 bis 400°C für zwei bis vier h erfolgt, dann der Spulen-Rohling (5) mit einer maximalen Temperaturabfallrate von 25° C/h auf 200 bis 250°C abgekühlt wird, dann bei dieser Temperatur für eine bis fünf h gehalten wird und anschließend auf Raumtemperatur abgekühlt wird.

6. Verfahren nach Anspruch 4 oder 5,
**dadurch gekennzeichnet, daß**
das Bördeln mit kegelig geformten, sich gegenüberliegenden Bördelwerkzeugen (20) unter einer Rotationsbewegung des in einem Spannwerkzeug (21) eingespannten Spulen-Rohlinges (5) erfolgt.

7. Verfahren nach Anspruch 6,
**dadurch gekennzeichnet, daß**
dem Bördeln als weiterer Verfahrensschritt ein Rollieren der vorgeformten Endflansche (3) unter rechtwinkligem Andrücken der Endfiansche (3) an das Spannwerkzeug (21) für den Spulen-Rohling (5) erfolgt.

8. Verfahren nach einem der Ansprüche 1 bis 3,
**dadurch gekennzeichnet, daß**
das Umformen (Schritt c) bei Schmiedetemperatur aus einem Spulen-Rohling (5) mit vollem Querschnitt erfolgt, dessen Enden (6) um das beidseitige Übermaß (x) mit Schmiede- oder Preßwerkzeugen (30) in die Form der Endflansche (3) aufweisende Aussparungen (32) gestaucht werden.

9. Verfahren nach Anspruch 8,
**dadurch gekennzeichnet, daß**
das Umformen bei 360 bis 420 ° C erfolgt.

10. Verfahren nach Anspruch 8 oder 9,
**dadurch gekennzeichnet, daß**
in den auf Schmiedetemperatur erwärmten Spulen-Rohling (5) an seinen, die Endflansche (3) bildenden Enden (6) beim Umformen eine Vertiefung (34) eingedrückt wird.

11. Verfahren nach Anspruch 10,
**dadurch gekennzeichnet, daß**
das Eindrückwerkzeug (35) einen größeren Hub als das Schmiede- oder Preßwerkzeug (30) aufweist.

12. Verfahren nach Anspruch 8 oder 9,
**dadurch gekennzeichnet, daß**
vor dem Umformen der Endflansche (3) der mittige, den Wickelkörper (2) bildende Bereich des Spulen-Rohlings (5) in seinem Durchmesser durch Schmieden mit radial angreifenden Schmiedewerkzeugen (15) zu einem hantelförmigen Schmiedekörper reduziert wird.

13. Verfahren nach Anspruch 12,
**dadurch gekennzeichnet, daß**
der Spulen-Rohling (5) während des Schmiedens rotiert.

14. Verfahren nach einem der Ansprüche 1 bis 13,
**dadurch gekennzeichnet, daß**
das Härten (Schritt d) des Spulenkörpers (1) bei einer Temperatur von 400 bis 450°C mit einer Härtedauer von 25 Minuten erfolgt, wonach der Spulenkörper (1) in Wasser abgeschreckt wird.

15. Verfahren nach einem der Ansprüche 1 bis 14,
**dadurch gekennzeichnet, daß**
das Altern (Schritt e) bei 100 bis 130°C über drei bis sechs h erfolgt, dann die Temperatur auf 130 bis 160°C erhöht wird und über sechs bis zehn h gehalten wird und anschließend der Spulenkörper (1) in Luft abgekühlt wird.

## Claims

1. Process for producing a bobbin from aluminium alloy, the bobbin having a cylindrical core for receiving wound material, especially synthetic yam, and end flanges of larger diameter, with the following process steps:
a) extrusion moulding or flow extrusion moulding a substantially cylindrical bobbin blank (5);
b) cutting the bobbin blank (5) to the desired length (I) of bobbin plus an excess length (x) for forming the end flanges (3);
c) shaping the two ends (6) of the bobbin blank (5) to form the end flanges (3);
d) hardening the bobbin (1); and
e) ageing the bobbin (1).

2. Process according to claim 1, **characterized in that** moulding (step a) is performed as an indirect extrusion moulding wherein a hollow extrusion die (10) is provided through which the bobbin blank (5) emerges as an extruded billet.

3. Process according to claim 1 or claim 2, **characterized in that** extrusion moulding is performed at 360 to 420 °C.

4. Process according to any one of claims 1 to 3, **characterized in that** shaping (step c) is performed at room temperature by flanging both ends (6) of a bobbin blank (5) of tubular form, the latter having first been soft annealed.

5. Process according to claim 4, **characterized in that** soft annealing is performed at 340 to 400 °C for two to four hours, then the bobbin blank (5) is cooled at a maximum rate of temperature-drop of 25°C/h to 200 to 250 °C and then kept at this temperature for one to five hours and thereafter cooled to room temperature.

6. Process according to claim 4 or claim 5, **characterized in that** flanging is performed with conically shaped opposing flanging tools (20), with rotation of the bobbin blank (5) which is gripped in a clamp tool (21).

7. Process according to claim 6, **characterized in that** flanging is followed by a further method step of rolling the preformed end flanges (3) by pressing the end flanges (3) at right angles onto the clamp tool (21) for the bobbin blank (5).

8. Process according to any one of Claims 1 to 3, **characterized in that** shaping (step c) is performed at forging temperature on a bobbin blank (5) of solid cross-section, the ends (6) thereof being upset by the excess length (x) at both ends, with forging or pressing tools (30), into recesses (32) having the form of the end flanges (3).

9. Process according to claim 8, **characterized in that** shaping is performed at 360 to 420 °C.

10. Process according to claim 8 or claim 9, **characterized in that**, during shaping, an indentation (34) is impressed into the ends (6) forming the end flanges (3) of the bobbin blank (5) which has been heated to forging temperature.

11. Process according to claim 10, **characterized in that** the impressing tool (35) has a greater stroke than the forging or pressing tool (30).

12. Process according to claim 8 or claim 9, **characterized in that**, prior to shaping the end flanges (3), the central portion forming the core (2) of the bobbin blank (5) is reduced in diameter to a dumb-bell shaped body by forging with radially engaging forging tools (15).

13. Process according to claim 12, **characterized in that** the bobbin blank (5) is rotated during forging.

14. Process according to any one of claims 1 to 13, **characterized in that** hardening (step d) of the bobbin (1) is performed at a temperature of 400 to 450 °C for a hardening period of 25 minutes, after which the bobbin (1) is quenched in water.

15. Process according to any one of claims 1 to 14, **characterized in that** ageing (step e) is performed at 100 to 130 °C for three to six hours, then the temperature is raised to 130 to 160 °C and maintained for six to ten hours and the bobbin (1) is then cooled in air.

## Revendications

1. Procédé de fabrication d'un corps de bobine en alliage d'aluminium, le corps de bobine présentant un corps d'enroulement cylindrique pour recevoir la matière d'enroulement, notamment un fil synthétique et des collerettes d'extrémité de diamètre plus grand par rapport à celle-ci, comportant les étapes suivantes :
a) extrusion ou formage d'une ébauche de bobine essentiellement cylindrique (5);
b) mise de l'ébauche de bobine (5) à la longueur souhaitée (1) plus une surdimension (x) pour former les collerettes d'extrémité (3);
c) formage des deux extrémités (6) de l'ébauche de bobine (5) en collerettes d'extrémité (3);
d) durcissage du corps de bobine (1); et
e) vieillissement du corps de bobine (1).

2. Procédé selon la revendication 1, **caractérisé par le fait que** le pressage (étape a) est effectué comme une extrusion indirecte, un poinçon creux (10) étant prévu, par lequel l'ébauche de bobine (5) sort comme un boudin.

3. Procédé selon la revendication 1 ou 2, **caractérisé par le fait que** l'extrusion s'effectue entre 360 et 420°C.

4. Procédé selon l'une quelconque des revendications 1 à 3, **caractérisé par le fait que** le formage (étape c) à la température ambiante s'effectue par repliage des deux extrémités (6) de l'ébauche de bobine (5) conformée en tube, celle-ci étant préalablement revenue pour être ramollie.

5. Procédé selon la revendication 4, **caractérisé par le fait que** le revenu de ramollissement s'effectue entre 340 et 400°C pour deux à quatre heures, l'ébauche de bobine (5) étant alors refroidie, avec un taux de chute de température maximal de 25°C/h, jusqu'à 200 à 250°C, puis maintenue à cette température pendant une à cinq heures et ensuite refroidie à la température ambiante.

6. Procédé selon la revendication 4 ou 5, **caractérisé par le fait que** le repliage s'effectue avec des outils de repliage (20) en forme de cône situés en face l'un de l'autre, avec un mouvement de rotation de l'ébauche de bobine (5) serrée dans un outil de serrage (21).

7. Procédé selon la revendication 6, **caractérisé par le fait qu'**à la suite du repliage est effectué une autre étape pour l'ébauche de bobine (5) consistant en un écrouissage au rouleau des collerettes d'extrémité préformées (3) par un pressage à angle droit des collerettes d'extrémité (3) contre l'outil de serrage (21).

8. , Procédé selon une des revendications 1 à 3, **caractérisé par le fait que** le formage (étape c) s'effectue à une température de forgeage à partir d'une ébauche de bobine (5) à section entière, dont les extrémités (6) sont refoulées sur les surdimensions des deux côtés (x) au moyen d'outils de forgeage ou de pressage, dans des évidements (32) présentant les formes des collerettes d'extrémité (3).

9. Procédé selon la revendication 8, **caractérisé par le fait que** le formage s'effectue entre 360 et 420°C.

10. Procédé selon la revendication 8 ou 9, **caractérisé par le fait que** dans l'ébauche de bobine (5) chauffée à la température de forgeage, à ses extrémités formant les collerettes d'extrémité, une concavité est formée par enfoncement.

11. Procédé selon la revendication 10, **caractérisé par le fait que** l'outil d'enfoncement (35) présente une course de travail plus grande que celle de l'outil de forgeage ou de pressage.

12. Procédé selon la revendication 8 ou 9, **caractérisé par le fait que**, avant le formage des collerettes d'extrémité (3), la zone centrale de l'ébauche de bobine (5) formant le corps de bobine (2) est réduit dans son diamètre, par forgeage au moyen d'outils de forgeage (15) attaquant radialement, jusqu'à obtenir un corps forgé en forme d'haltère.

13. Procédé selon la revendication 12, **caractérisé par le fait que** l'ébauche de bobine (5) tourne pendant le forgeage.

14. Procédé selon l'une des revendications 1 à 13, **caractérisé par le fait que** le durcissage (étape d) du corps de bobine (1) s'effectue à une température de 400 à 450°C avec une durée de 25 minutes, après quoi, le corps de bobine (1) est trempé dans de l'eau.

15. Procédé selon l'une des revendications 1 à 14, **caractérisé par le fait que** le vieillissement (étape e) s'effectue entre 100 et 130°C sur trois à six heures, que la température est alors élevée jusqu'à 130 à 160°C et y est maintenue pendant plus de six à dix heures et qu'ensuite le corps de bobine (1) est refroidi à l'air.
